# FASCICULE DE BREVET EUROPEEN

(11) **EP 3 743 315 B1**
(45) Date de publication et mention de la délivrance du brevet: **10.11.2021**
(21) Numéro de dépôt: 19701653.8
(22) Date de dépôt: 24.01.2019
(51) Int. Cl.: B60R 19/04, B60R 19/26, B60R 19/42, B62D 21/18

(54) **KART ÉQUIPÉ D'UNE PROTECTION PÉRIPHÉRIQUE DÉCOUPLÉE EN TORSION.**
KART, AUSGESTATTET MIT EINER UNFÄNGLICHEN SCHUTZVORRICHTUNG, DIE IN TORSION ENTKOPPELT IST
CART EQUIPPED WITH A PERIPHERAL PROTECTION SYSTEM WHICH IS DECOUPLED IN TORSION

(30) Priorité: 26.01.2018 FR 1850641
(43) Date de publication de la demande: 02.12.2020
(73) Titulaire: Sodikart, 44220 Couëron (FR)
(72) Inventeur: GERGAUD, William, 44119 TREILLIERES (FR)
(74) Mandataire: Vidon Brevets & Stratégie
(86) Numéro de dépôt international: PCT/EP2019/051803
(87) Numéro de publication internationale: WO 2019/145450

(56) Documents cités:
- EP-A1- 2 204 303
- EP-A1- 2 808 205
- WO-A2-97/15473
- US-A- 2 168 908

## Description

### 1. Domaine de l'invention

Le domaine de l'invention est celui du karting. Plus précisément, l'invention concerne la protection des karts contre les chocs.

L'invention s'applique particulièrement aux karts de location, pour lesquels l'exigence de sécurité est essentielle, du fait de l'inexpérience de certains pilotes, et/ou du niveau d'expérience différents des pilotes présents simultanément sur la piste. Dans ce but, la réglementation européenne, notamment, prévoit que les karts de location doivent être équipés d'une protection périphérique.

### 2. Art antérieur

Le document EP 2 204 303 A1 divulgue un kart selon le préambule de la revendication 1.

### 2.1 Kart

Les karts sont des véhicules motorisés exploités sur des pistes fermées, par opposition à des véhicules roulant sur route. Ces pistes peuvent être extérieures (« outdoor ») ou couvertes (« indoor »).

On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres. Les seconds sont la plupart du temps la propriété de personnes privées, qui les utilisent pour leur loisir, en s'entraînant et en participant à des compétitions.

L'invention concerne particulièrement les karts de location, mais peut également être mis en œuvre sur d'autres karts, notamment les karts de loisir-compétition.

### 2.2 Risques de choc

En kart, les pertes de contrôle et les sorties de piste sont fréquentes. Aussi, pour en atténuer les effets, les pistes sont munies de protection (le plus souvent des pneus) ou de dégagements appropriés (par exemple des bacs à sable ou à graviers) sur les pistes « outdoor ».

On remarque généralement que les conséquences des pertes de contrôle sont aggravées par le fait que les karts roulent en « flotte », c'est-à-dire à plusieurs en même temps (ce qui accroît les risques de télescopage).

Les chocs subis par un kart et son pilote peuvent donc être multiples : chocs contre une protection de piste et chocs entre deux karts, ceci sous tous les angles possibles. Ces chocs sont particulièrement fréquents sur les pistes « indoor », plus étroites et au tracé très sinueux.

On comprend évidemment que les chocs, qui peuvent être relativement violents, peuvent non seulement causer des dommages à la structure et aux accessoires du kart, mais présentent également un danger pour la sécurité des pilotes.

Il est donc important de prévoir des protections, qui se présentent généralement sur la forme d'une protection périphérique.

### 2.3 Absence de suspension

Sur le plan technique, les karts présentent certaines particularités par rapport à d'autres véhicules sportifs. En effet, ils n'ont ni différentiel, ni suspension.

L'absence de suspension a pour conséquence que la capacité des karts à prendre des courbes dépend fortement de la déformation (torsion) du châssis qui, si elle est adéquate, permet de lever ou de soulager la roue intérieure arrière et donc d'éviter le sous-virage.

En d'autres termes, il est important, pour avoir un pilotage agréable et efficace, que le châssis soit suffisamment souple, et puisse « travailler », ou « vriller ». En d'autres termes encore, le châssis doit offrir une capacité de torsion suffisante, et les éléments s'opposant à la torsion devraient être évités autant que faire se peut.

### 2.4 Protections

Cependant, les protections rapportées sur le châssis s'opposent généralement à ces déformations souhaitables, en rigidifiant le châssis. On sait qu'empêcher le châssis de travailler, c'est-à-dire de pouvoir se déformer, en particulier en torsion, va à l'encontre des performances du kart.

Les organes de protection des karts et de leurs pilotes contre les chocs doivent assurer au moins certaines des fonctions suivantes :
- réduire les risques de chevauchement et d'encastrement ;
- réduire les risques de contact avec les roues d'autres karts ;
- résister à l'abrasion due aux contacts ;
- absorber l'énergie d'impact ;
- ne pas pénaliser la tenue de route ;
- résister à la température (près du pot d'échappement en particulier) ;
- contribuer à l'esthétique ;

Lors de l'apparition des premiers karts, aucune protection n'était prévue. Depuis, différents types de protection ont été proposées, notamment :
- des protections par carrosserie ;
- des protections par carrosserie combinée à un entourage plastique ;
- des protections absorbant l'énergie.

Désormais, selon la normalisation européenne, une protection périphérique est nécessaire.

Un exemple de protection périphérique est illustré par le document WO97/15473. Selon cette approche, la protection est formée de plusieurs sections articulées entre elles autour d'axes verticaux (le kart étant posé sur un sol horizontal), des éléments amortisseurs reliant les sections de protection au châssis pour permettre une déformation et une transmission des effets d'un choc d'une section à une autre.

Cette approche présente notamment l'inconvénient de former une structure s'opposant à la torsion du châssis du kart.

### 2.5 Protection de roues avant coulissante

Le Titulaire de la présente demande de brevet a proposé une solution améliorant les protections rigides, souvent formées d'une seule pièce fixée au châssis, en prévoyant notamment une protection de roue avant mobile en coulissement par rapport au châssis, comme décrit dans le document de brevet EP2204303. Selon cette approche, la protection périphérique n'est pas monobloc, les éléments de protection de roue avant pouvant se déplacer en coulissement par rapport aux éléments de protection latéraux, permettant une certaine déformation du châssis.

Pour autant, dans certains cas, cette solution peut ne pas être suffisante ou adaptée, et notamment la possibilité de torsion du châssis peut être restreinte par la protection.

Il existe ainsi un besoin d'une solution adaptée notamment aux karts de location permettant d'obtenir un comportement pouvant être qualifié de plus sportif, dont le comportement se rapproche, autant que possible, d'un kart de compétition.

### 3. Présentation de caractéristiques essentielles ou optionnelles de l'invention

L'invention a pour objet un kart selon la revendication 1, comprenant un châssis s'étendant essentiellement selon un plan de référence sensiblement horizontal, ledit châssis portant un ensemble de protection périphérique formé de plusieurs éléments de protection distincts, dont :
- au moins un élément de protection frontal ;
- au moins un élément de protection latéral, de chaque côté dudit kart. Selon l'invention, au moins un desdits éléments de protection est solidarisé audit châssis ou à un autre élément de protection par une liaison pivot dont l'axe de rotation s'étend sensiblement parallèlement audit plan de référence.

Cette liaison pivot introduit au moins un degré de liberté essentiellement en rotation, selon un axe sensiblement horizontal. Le qualificatif « horizontal » s'entend ici, et pour la définition du plan de référence, dans une situation classique, dans laquelle le châssis du kart, ou le kart (le châssis étant équipé de ses roues) repose sur un plan horizontal. En d'autres termes, le plan de référence est défini comme un plan dans lequel s'étendent sensiblement la plupart des tubes formant le châssis, ou un plan passant par les axes des quatre roues.

Ainsi, malgré la présence d'une protection périphérique efficace, le châssis n'est pas contraint par cette protection, et cette liaison pivot s'étendant horizontalement ou sensiblement horizontalement permet au châssis de se déformer suffisamment, notamment en torsion, pour offrir un agrément et une efficacité de pilotage supérieurs, par rapport aux karts à protection périphérique connus, pouvant se rapprocher du comportement d'un kart de compétition.

Cette approche est simple à mettre en œuvre, et efficace, tant sur le plan de la sécurité que sur celui du pilotage.

Selon une mise en œuvre particulière, ledit élément de protection latéral est fixe par rapport audit châssis, et est relié par des liaisons pivot dont l'axe de rotation s'étend sensiblement parallèlement audit plan de référence respectivement à un élément de protection de roue avant et à un élément de protection de roue arrière.

Selon un autre aspect particulier, le kart peut comprendre un élément de protection arrière fixe par rapport audit châssis, et relié par une liaison pivot dont l'axe de rotation s'étend sensiblement parallèlement audit plan de référence à un élément de protection de roue arrière à chacune de ses extrémités.

Selon encore un autre aspect particulier, ledit élément de protection frontal peut être solidarisé, à chacune de ses extrémités, à un élément de protection de roue avant.

Selon encore un autre aspect particulier, ledit élément de protection frontal peut être solidarisé à au moins un élément de liaison découplé dudit châssis.

En particulier, ledit élément de liaison peut se présenter sous la forme d'un tube supérieur sensiblement en forme de U, dont les extrémités sont articulées sur ledit châssis et dont la base est mobile en rotation par rapport audit élément de protection frontal.

Ainsi, ledit élément de liaison peut être mobile en rotation par rapport audit élément de protection frontal.

Ledit élément de protection frontal peut par exemple coopérer avec des moyens d'absorption de l'énergie, assurant une liaison entre ledit élément de protection frontal et une portion dudit châssis.

Lesdits moyens d'absorption de l'énergie comprennent par exemple au moins un bloc de mousse à faible résilience.

### 4. Liste des figures

D'autres caractéristiques et avantages de l'invention apparaîtront plus clairement à la lecture de la description suivante d'un mode de réalisation préférentiel de l'invention, d'une de ses variantes, donnés à titre d'exemples illustratifs et non limitatifs, et des dessins annexés parmi lesquels :
- la figure 1 est une vue du châssis d'un kart équipé d'un ensemble de protection selon l'invention ;
- la figure 2 est une vue partiellement éclatée du kart de la figure 1 ;
- la figure 3 est une vue agrandie de la partie avant du kart de la figure 1;
- la figure 4 est une autre vue agrandie de la partie avant du kart de la figure 1.

### 5. Description d'un mode de réalisation particulier

L'invention concerne donc un nouveau kart, et en particulier une nouvelle protection périphérique de kart, adaptée de façon à répondre aux exigences de sécurité, d'une part, et par exemple de passer avec succès les crash-tests imposés par les normes européennes, et d'autre part à permettre au châssis, ou cadre, de « travailler », c'est-à-dire se déformer, en particulier en torsion, de façon à favoriser les performances et l'efficacité du kart.

Pour ceci, la protection périphérique est formée de plusieurs éléments de protection, dont au moins certains sont reliés entre eux et/ou au châssis par une liaison autorisant au moins un degré de liberté en rotation, à savoir une liaison pivot dont l'axe de rotation s'étend sensiblement horizontalement.

Préférentiellement, l'ensemble des liaisons pivot s'étendent sensiblement dans un même plan horizontal, confondu ou parallèle avec un plan de référence défini par le châssis.

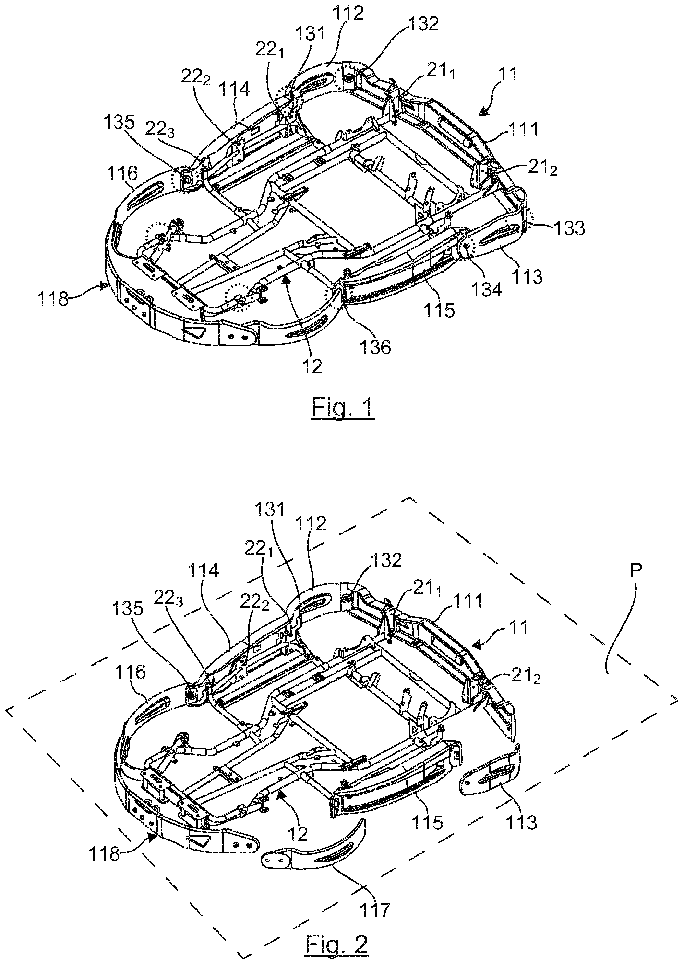

Un exemple de châssis et de protection périphérique est illustré sur les figures 1 et 2. Sur la figure 1, la protection périphérique 11 est illustrée solidarisée au châssis 12. Sur la figure 2, qui est une vue en éclatée, certains éléments de protection de la protection périphérique sont éloignés du châssis.

Le châssis 12 est ici un châssis essentiellement tubulaire, formé d'un assemblage de tubes soudés entre eux. Ce châssis définit un plan de référence P (figure 2), horizontal ou sensiblement horizontal (lorsque le châssis est placé à plat sur une surface horizontale), dans lequel s'étendent au moins la plupart de ces tubes. Le plan de référence P peut également être défini par les axes des quatre roues (non représentées).

Ce châssis 12 est destiné à recevoir les différents éléments constitutifs du kart (moteur, transmission, pédalier, roues, direction, siège...). Ces différents éléments sont classiques, et assemblés de façon classique, et ne sont donc pas décrits.

La protection périphérique 11 comprend :
- un élément de protection arrière 111, fixé au châssis par l'intermédiaire de deux pièces de liaison 21₁, 21₂ ;
- deux éléments de protection de roue arrière 112 et 113 ;
- deux éléments de protection latéraux 114 et 115, fixés au châssis par des éléments de fixation 22₁, 22₂ et 22₃ ;
- deux éléments 116 et 117 de protection de roue avant ;
- un élément de protection avant 118.

Chaque élément de protection de roue arrière 112 et 113 est relié d'une part à l'élément de protection arrière 111, et d'autre part à l'élément de protection latéral correspondant 114, 115, par des liaisons pivots 131, 132, 133 et 134.

Ces liaisons pivots 131, 132, 133 et 134 présentent chacune un axe de rotation s'étendant sensiblement horizontalement, c'est-à-dire sensiblement dans le plan de référence P ou sensiblement parallèlement à ce plan de référence P.

En conséquence, selon ce mode de réalisation, tous les axes de rotation s'étendent sensiblement dans un même plan, le plan de référence ou un plan sensiblement parallèle à celui-ci.

Le terme « sensiblement » signifie ici qu'une tolérance de quelques degrés par rapport à l'horizontal, ou de quelques millimètres par rapport au plan de référence, est possible, tant que la liaison pivot ne s'oppose pas de façon significative à la torsion du châssis.

Ces liaisons pivots mettent en œuvre, par exemple, un boulon et deux rondelles montés de façon à autoriser un mouvement de rotation d'une protection par rapport à sa voisine.

C'est ainsi le cas de la protection de roue arrière 112, 113, d'une part par rapport à la protection arrière 111 et d'autre part par rapport à l'élément de protection latéral 114, 115. Ces éléments de protection sont ainsi découplés, sur une plage de déplacement prédéterminée, et peuvent se déplacer suffisamment les uns par rapport aux autres pour ne pas s'opposer à la torsion du châssis 11, ou à tout le moins de façon à limiter l'action bloquante agissant contre cette torsion, ou autre déplacement ou déformation du châssis, due à une protection périphérique fixe par rapport au châssis.

Un tel découplage des éléments de protection permet notamment de libérer le châssis, c'est-à-dire de permettre des déformations, en particulier en torsion, de ce dernier, afin d'en améliorer la dynamique et ainsi optimiser les performances du kart.

De la même façon, les protections de roue avant 116 et 117 sont solidarisées à l'élément de protection latéral correspondant 114, 115 à l'aide d'une liaison pivot 135, 136 dont l'axe de rotation s'étend également sensiblement parallèlement au plan de référence.

On comprend que ces différentes liaisons pivots 131 à 136 permettent une rotation d'un élément de protection par rapport à l'autre. Plus généralement, la liaison doit permettre au moins un degré de liberté, essentiellement en rotation. Des degrés de liberté supplémentaires peuvent le cas échéant être ajoutés, en fonction des besoins, par exemple sous la forme d'une liaison pivot glissant, un boulon étant alors guidé dans une lumière oblongue, ou plus généralement une lumière de forme adaptée.

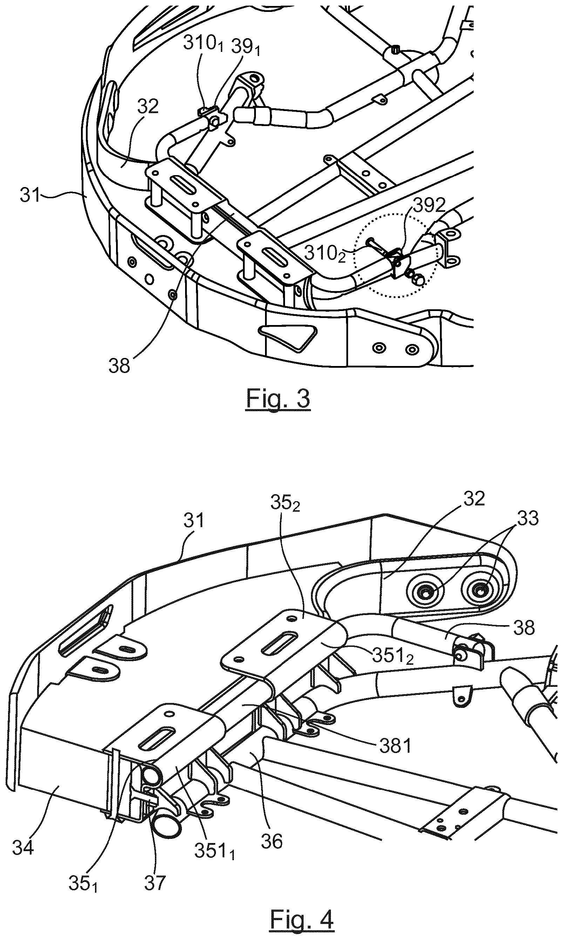

L'élément de protection avant 118 est plus précisément illustré sur les figures 3 et 4.

Il comprend, selon la technique déjà développée par le titulaire de la présente demande de brevet, une lame extérieure 31, sensiblement en forme d'arc et une lame intérieure 32, sensiblement en forme d'oméga. C'est deux lames 31 et 32 sont assemblées par leurs extrémités, par deux vis 33 de chaque côté. La structure ainsi formée est déformable, pour encaisser les chocs. Un élément absorbant l'énergie 34 (visible sur la figure 4), par exemple un bloc de mousse à faible résilience, est monté entre les deux lames.

Ce bloc de mousse 34 est maintenu par deux pièces formant mâchoire 35₁, 35₂. Elles sont fixées à un tube 36 du châssis, dit tube inférieur, à l'aide de vis 37.

Selon un mode de réalisation particulier de l'invention, l'élément de protection frontal est solidarisé à au moins un élément de liaison découplé du châssis.

Dans le mode de réalisation illustré, l'élément de liaison découplé du châssis se présente sous la forme d'un tube supérieur 38, cintré en forme de U, prévu pour autoriser une certaine déformation du cadre, en introduisant une possibilité de déplacement de l'ensemble de protection avant par rapport au châssis. Pour ceci, le tube supérieur 38 est articulé, libre en rotation, sur le tube inférieur 35. Ce dernier porte deux U de couplage 39₁, 39₂, recevant un boulon 310₁, 310₂ maintenant les extrémités du tube supérieur 38.

Par ailleurs, la base 381 de ce tube supérieur circule dans des logements 351₁, 351₂ prévus à cet effet dans les mâchoires 35₁, 35₂ maintenant le bloc de mousse 34. Ces logements 351₁, 351₂, et la base 381 du tube supérieur sont configurés de façon à permettre la rotation de celles-ci dans les logements.

Ainsi, l'ensemble de protection périphérique est découplé du châssis, qui peut se déformer, notamment en torsion, grâce à la mise en œuvre de liaison pivot dont l'axe de rotation s'étend sensiblement parallèlement au plan longitudinal du châssis. Ceci permet de fournir un kart présentant des caractéristiques, en terme de déformation, et donc d'agrément de pilotage, se rapprochant des karts de compétition, tout en conservant une protection périphérique efficace, nécessaire notamment sur les karts destinés à la location.

## Revendications

1. Kart comprenant un châssis (12) s'étendant essentiellement selon un plan de référence (P) sensiblement horizontal, ledit châssis portant un ensemble de protection périphérique (11) formé de plusieurs éléments de protection distincts (111 à 118), dont :
- au moins un élément de protection frontal (118) ; et
- au moins un élément de protection latéral (114, 115) de chaque côté dudit kart,
**caractérisé en ce qu'**au moins un desdits éléments de protection est solidarisé audit châssis (12) ou à un autre élément de protection par une liaison pivot (131 à 136) dont l'axe de rotation s'étend sensiblement parallèlement audit plan de référence (P), ladite liaison pivot (131 à 136) permettant qu'au moins un desdits éléments de protection (111 à 118) pivote par rapport audit châssis (12) et/ou à au moins un autre desdits éléments de protection (111 à 118).

2. Kart selon la revendication 1, **caractérisé en ce que** ledit élément de protection latéral (114, 115) est fixe par rapport audit châssis (12), et est relié par des liaisons pivot (131, 134, 135, 136) dont l'axe de rotation s'étend sensiblement parallèlement audit plan de référence (P) respectivement à un élément de protection de roue avant (116, 117) et à un élément de protection de roue arrière (112, 113).

3. Kart selon la revendication 1, **caractérisé en ce qu'**il comprend un élément de protection arrière (111) fixe par rapport audit châssis (12), et relié par des liaisons pivot (132, 133) dont l'axe de rotation s'étend sensiblement parallèlement audit plan de référence (P) à un élément de protection de roue arrière (112, 113) à chacune de ses extrémités.

4. Kart selon la revendication 1, **caractérisé en ce que** ledit élément de protection frontal (118) est solidarisé, à chacune de ses extrémités, à un élément de protection de roue avant (116, 117).

5. Kart selon la revendication 1, **caractérisé en ce que** ledit élément de protection frontal (118) est solidarisé à au moins un élément de liaison (38) découplé dudit châssis (12).

6. Kart selon la revendication 5, **caractérisé en ce que** ledit élément de liaison est un tube supérieur (38) sensiblement en forme de U, dont les extrémités sont articulées sur ledit châssis (12) et dont la base (381) est mobile en rotation par rapport audit élément de protection frontal (118).

7. Kart selon la revendication 1, **caractérisé en ce que** ledit élément de protection frontal (118) coopère avec des moyens d'absorption de l'énergie, assurant une liaison entre ledit élément de protection frontal (118) et une portion dudit châssis (12).

8. Kart selon la revendication 7, **caractérisé en ce que** lesdits moyens d'absorption de l'énergie comprennent au moins un bloc de mousse (34) à faible résilience.

## Patentansprüche

1. Kart, welches ein Chassis (12) umfasst, das sich im Wesentlichen entlang einer im Wesentlichen horizontalen Referenzebene (P) erstreckt, wobei das Chassis eine umlaufende Schutzvorrichtung (11) trägt, die von mehreren verschiedenen Schutzelementen (111 bis 118) gebildet wird, darunter:
- wenigstens ein vorderes Schutzelement (118); und
- wenigstens ein seitliches Schutzelement (114, 115) auf jeder Seite des Karts,
**dadurch gekennzeichnet, dass** wenigstens eines der Schutzelemente mit dem Chassis (12) oder mit einem anderen Schutzelement durch eine Schwenkverbindung (131 bis 136) fest verbunden ist, deren Drehachse sich im Wesentlichen parallel zu der Referenzebene (P) erstreckt, wobei die Schwenkverbindung (131 bis 136) ermöglicht, dass wenigstens eines der Schutzelemente (111 bis 118) in Bezug auf das Chassis (12) und/oder auf wenigstens ein anderes der Schutzelemente (111 bis 118) schwenkt.

2. Kart nach Anspruch 1, **dadurch gekennzeichnet, dass** das seitliche Schutzelement (114, 115) in Bezug auf das Chassis (12) feststehend ist und durch Schwenkverbindungen (131, 134, 135, 136), deren Drehachse sich im Wesentlichen parallel zu der Referenzebene (P) erstreckt, mit einem vorderen Radschutzelement (116, 117) bzw. mit einem hinteren Radschutzelement (112, 113) verbunden ist.

3. Kart nach Anspruch 1, **dadurch gekennzeichnet, dass** es ein hinteres Schutzelement (111) umfasst, das in Bezug auf das Chassis (12) feststehend ist und durch Schwenkverbindungen (132, 133), deren Drehachse sich im Wesentlichen parallel zu der Referenzebene (P) erstreckt, an jedem seiner Enden mit einem hinteren Radschutzelement (112, 113) verbunden ist.

4. Kart nach Anspruch 1, **dadurch gekennzeichnet, dass** das vordere Schutzelement (118) an jedem seiner Enden mit einem vorderen Radschutzelement (116, 117) verbunden ist.

5. Kart nach Anspruch 1, **dadurch gekennzeichnet, dass** das vordere Schutzelement (118) mit wenigstens einem Verbindungselement (38) fest verbunden ist, das von dem Chassis (12) entkoppelt ist.

6. Kart nach Anspruch 5, **dadurch gekennzeichnet, dass** das Verbindungselement ein oberes Rohr (38) ist, das im Wesentlichen von der Form eines "U" ist, dessen Enden an dem Chassis (12) angelenkt sind und dessen Basis (381) drehbeweglich in Bezug auf das vordere Schutzelement (118) ist.

7. Kart nach Anspruch 1, **dadurch gekennzeichnet, dass** das vordere Schutzelement (118) mit Mitteln zur Absorption von Energie zusammenwirkt, die eine Verbindung zwischen dem vorderen Schutzelement (118) und einem Abschnitt des Chassis (12) sicherstellen.

8. Kart nach Anspruch 7, **dadurch gekennzeichnet, dass** die Mittel zur Absorption von Energie wenigstens einen Schaumstoffblock (34) mit geringer Rückprallelastizität umfassen.

## Claims

1. Kart comprising a chassis (12) which extends substantially along a substantially horizontal reference plane (P), said chassis carrying a peripheral protection assembly (11) formed by a plurality of separate protection elements (111 to 118), including:
- at least one front protection element (118); and
- at least one lateral protection element (114, 115) at each side of the kart,
**characterised in that** at least one of the protection elements is fixedly joined to the chassis (12) or to another protection element by a pivot connection (131 to 136) whose rotation axis extends substantially parallel with the reference plane (P), said pivot connection (131 to 136) enabling at least one of the protection elements (111 to 118) to pivot relative to the chassis (12) and/or at least one other of the protection elements (111 to 118).

2. Kart according to claim 1, **characterised in that** the lateral protection element (114, 115) is fixed relative to the chassis (12) and is connected via pivot connections (131, 134, 135, 136) whose axis of rotation extends substantially parallel with the reference plane (P) to a front wheel protection element (116, 117) and a rear wheel protection element (112, 113), respectively.

3. Kart according to claim 1, **characterised in that** it comprises a rear protection element (111) which is fixed relative to the chassis (12) and which is connected by means of pivot connections (132, 133) whose rotation axis extends substantially parallel with the reference plane (P) to a rear wheel protection element (112, 133) at each of the ends thereof.

4. Kart according to claim 1, **characterised in that** the front protection element (118) is fixedly joined, at each of the ends thereof, to a front wheel protection element (116, 117).

5. Kart according to claim 1, **characterised in that** the front protection element (118) is fixedly joined to at least one connection element (38) which is decoupled from the chassis (12) .

6. Kart according to claim 5, **characterised in that** the connection element is an upper tube (38) which is substantially U-shaped and whose ends are articulated to the chassis (12) and whose base (381) can be moved in terms of rotation relative to the front protection element (118).

7. Kart according to claim 1, **characterised in that** the front protection element (118) cooperates with energy absorption means, ensuring a connection between the front protection element (118) and a portion of the chassis (12).

8. Kart according to claim 7, **characterised in that** the energy absorption means comprise at least one low-resilience foam block (34).
